# EUROPEAN PATENT SPECIFICATION

(11) **EP 0 442 512 B1**
(45) Date of publication and mention of the grant of the patent: **10.07.1996**
(21) Application number: 91102125.1
(22) Date of filing: 14.02.1991
(51) Int. Cl.: G11B 15/60, G11B 15/62

(54) **Magnetic head device for magnetic tapes**
Magnetkopfvorrichtung für magnetische Bänder
Dispositif à tête magnétique pour bandes magnétiques

(30) Priority: 16.02.1990 JP 35464/90; 05.10.1990 JP 268007/90; 20.11.1990 JP 314805/90
(43) Date of publication of application: 21.08.1991
(73) Proprietor: PIONEER ELECTRONIC CORPORATION, Meguro-ku Tokyo 153 (JP)
(72) Inventor: Saito, Akio, c/o Kawagoe Koujou, Ooaza Yamada, Kawagoe-shi, Saitama-ken (JP)
(74) Representative: Sajda, Wolf E., Dipl.-Phys.

(56) References cited:
- EP-A- 0 063 398
- EP-A- 0 120 518
- GB-A- 2 204 178
- GB-A- 2 205 988
- PATENT ABSTRACTS OF JAPAN vol. 11, no. 12 (P-535)(2459, 13 January 1987 & JP-A-61 187 150 (AKAI) 20 August 1986

## Description

The invention relates to a magnetic head device for reading and recording signals on a magnetic tape, especially in a cassette recorder, comprising a supporting member having an opening and tape guide means provided thereon for guiding a magnetic tape; and a magnetic head secured to walls of the opening of the supporting member.

It is necessary to keep the magnetic tape at a proper position with respect to a gap of the magnetic head in the cassette recorder. In a conventional cassette recorder, the position of the magnetic head can be adjusted so that the gap is located in place for the magnetic tape.

A magnetic head device of the type indicated above is known, for example, from the publication GB-A-2 205 988. This publication relates to an erase head mounting device for a tape recorder and deals with the problem that in conventional devices an erasing head is often not reliable in function due to insufficient coordination. In particular, a conventional erase head is liable to be displaced in a widthwise direction of the magnetic tape resulting in that the magnetic tape cannot be erased perfectly and that remnant magnetism may remain unevenly distributed over the entire width of the magnetic tape.

The structure according to GB-A-2 205 988 is primarily concerned with the mounting and guiding of such an erase head with respect to the magnetic tape, wherein an erasing head is mounted on an erasing head guide member and is fitted in an erasing head hole only for a back and forth movement in a direction perpendicular to the magnetic tape. In particular, the erasing head guide member has a substantially lying J-shape in side elevation and is mounted on a bottom wall thereof for a sliding movement on the head mounting plate.

In that conventional device, the erasing head is secured to a top wall of the guide member by suitable fastening means. Also, the guide member is fitted at the top wall thereof in the erasing head hole and a guide slot of the tape guide, while it is fitted at the bottom wall thereof in the guide hole of the tape guide. Hence, the guide member is guided only for movement in the direction perpendicular to the magnetic tape by the guide slot and the guide hole.

A magnetic head for recording and reproduction is provided separately from the erasing head along the path of a magnetic tape. The magnetic head is provided with a pair of tape restricting members located on opposite sides of a head supporting structure, wherein the tape restricting members extend forwardly towards the tape and comprise recesses formed at their forward ends for receiving the tape therein in order to restrict any widthwise up and down movement of the magnetic tape.

Both the erasing head and the magnetic head are mounted to the tape guide which is bent obliquely at the opposite end portions thereof toward the magnetic tape, wherein a pair of guide recesses are formed at the opposite bent ends of the tape guide for receiving the magnetic tape therein. Hence, the guide recesses on the one hand and the restricting members on the other hand are provided separately from each other so that an exact adjustment of the restricting members with respect to the guide recesses is necessary in practice. This is true both for a positioning in vertical direction and a suitable angle adjustment of the restricting members.

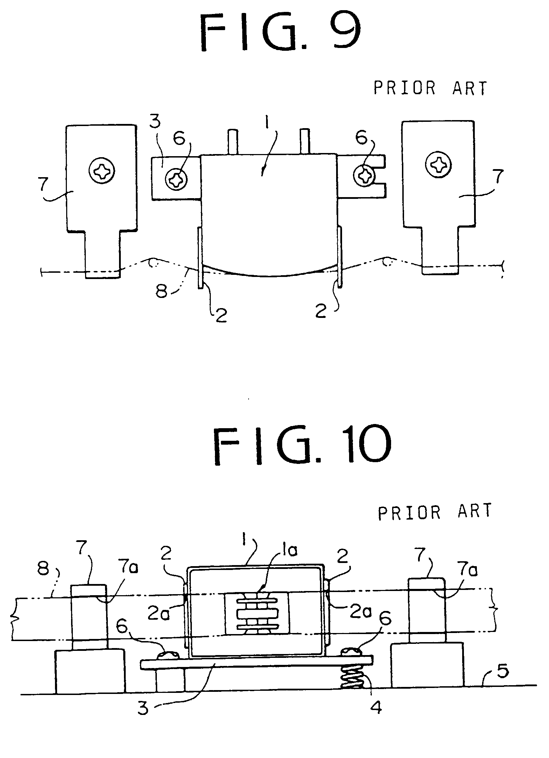

Figs. 9 and 10 show an example of the conventional magnetic head. A magnetic head 1 has a pair of inside tape guides 2 secured thereto at opposite sides of the head. A pair of outside tape guides 7 are mounted on a base 5 for the magnetic head 1. Both the tape guides 2 and 7 have guide grooves 2a and 7a, respectively. The magnetic head 1 is mounted on a supporting plate 3 which is held on the base 5 by springs 4 in a floating state. The angular position of the head 1 with respect to a magnetic tape 8 is adjusted by rotating a screw 6 screwed in the base passing through the coil of the spring 4.

The magnetic tape 8 is guided by the guide grooves 2a and 7a so as to pass a gap la of the head 1, making a right angle with a center line of the gap la. However, the guide grooves 2aand7a cannot be aligned exactly because of manufacturing tolerances of the parts. Although the angle of the magnetic head 1 is adjusted by screws 6, it is difficult to finely adjust the angle. In addition the angle may change with the time. Even if the angle is exact when the tape runs in the one direction, the effect may occur that the angle deviates when running in the reverse direction.

Japanese Utility Model Laid Open 60-77006 discloses a magnetic head in which a pair of auxiliary tape guides are made of plastic and integral with each other. However, the angle of the magnetic head must be adjusted by rotating screws.

### SUMMARY OF THE INVENTION

The object underlying the present invention is to provide a magnetic head device for reading and recording signals on a magnetic tape which provides an improved guiding of the magnetic tape with respect to the magnetic head without requiring a complicated angle adjustment, thereby simplifying the assembly of a corresponding recorder.

According to the present invention, the magnetic head device is characterized in that the tape guide means comprise a pair of inside tape guides and a pair of outside tape guides, wherein the inside tape guides are disposed on opposite sides of the opening of the supporting member, and in that both pairs of the inside tape guides and the outside tape guides are formed integrally with the supporting member.

According to a further development of the magnetic head device according to the invention, each of the tape guide means has a guide groove defined by opposite walls for guiding the magnetic tape passing the magnetic head. In such a magnetic head device it is preferred that the bottom of the respective guide groove is flat.

According to a further development of the magnetic head device according to the invention, the bottom of the guide groove has a curved shape in section, which is inclined with respect to a running direction of the magnetic tape.

In one specific embodiment according to the invention, the bottom of each outside tape guide has a width equal to that of the inside tape guide.

In another specific embodiment of the invention, the bottom of the inside tape guide has a larger width than the outside tape guide.

According to a further development of the magnetic head device according to the invention, each of the tape guides has a guide groove defined by opposite walls for guiding the magnetic tape passing the magnetic head.

In a specific embodiment of the magnetic head device according to the invention, the opposite walls of the guide groove of either of the inside tape guides and the outside tape guides comprise a perpendicular wall with respect to a bottom of the guide groove, and an inclined wall.

According to a further development of the magnetic head device according to the invention, the guide groove of the outside tape guide has a longer length in a tape running direction than the inside tape guide.

In a specific embodiment of the magnetic head device according to the invention, the width of each tape guide is 3,79 mm to 3,83 mm for a magnetic tape having a standard width of 3,76 mm to 3,81 mm.

According to a still further development of the magnetic head device according to the present invention, the supporting member with the integrally formed tape guides is made of a synthetic resin selected from polyimide resin, polyester resin, acetal resins, polystyrene and polyphenylen sulfide resin.

The other objects and features of this invention will become apparent from the following description with reference to the accompanying drawings.

### BRIEF DESCRIPTION OF DRAWINGS

Fig. 1 is a plan view of a magnetic head device according to the present invention;
Fig. 2 is a front view of the magnetic head device;
Fig. 3 is a graph showing the relationship between output reduction and a gap between a magnetic tape and a tape guide;
Figs. 4a and 4b are perspective views showing an outside tape guide and an inside tape guide;
Figs. 5a to 5c are plan views showing various guide grooves of tape guides partially in section;

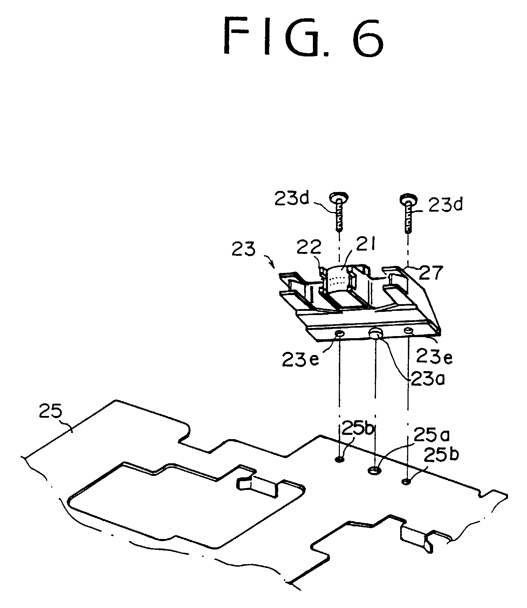

Fig. 6 is a perspective view for explaining the attachment of the magnetic head device to a cassette recorder;
Fig. 7 is a perspective view of the magnetic head device;
Fig. 8 is a graph showing characteristics of the magnetic head device of the present invention;
Figs. 9 and 10 are a plan view and a front view of a conventional magnetic head device.

### DETAILED DESCRIPTION OF THE PREFERRED EMBODIMENTS

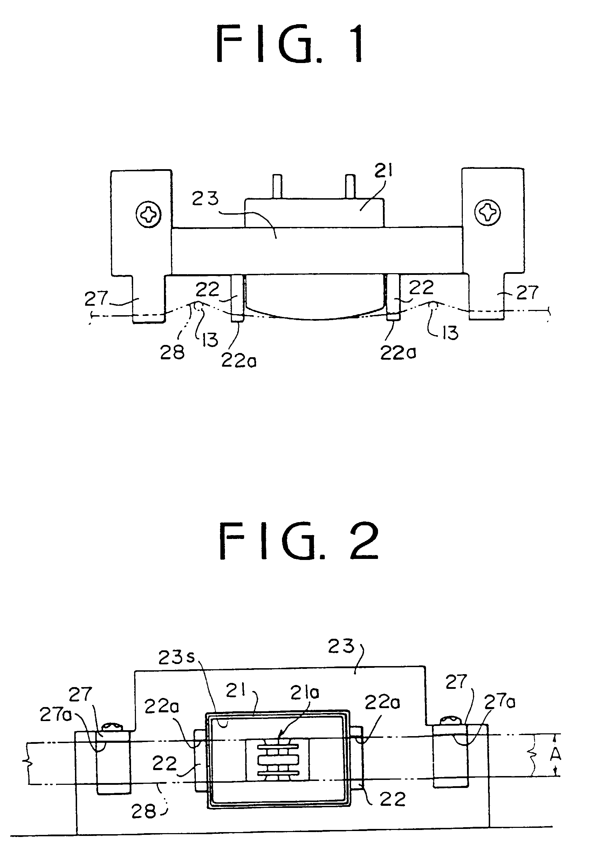

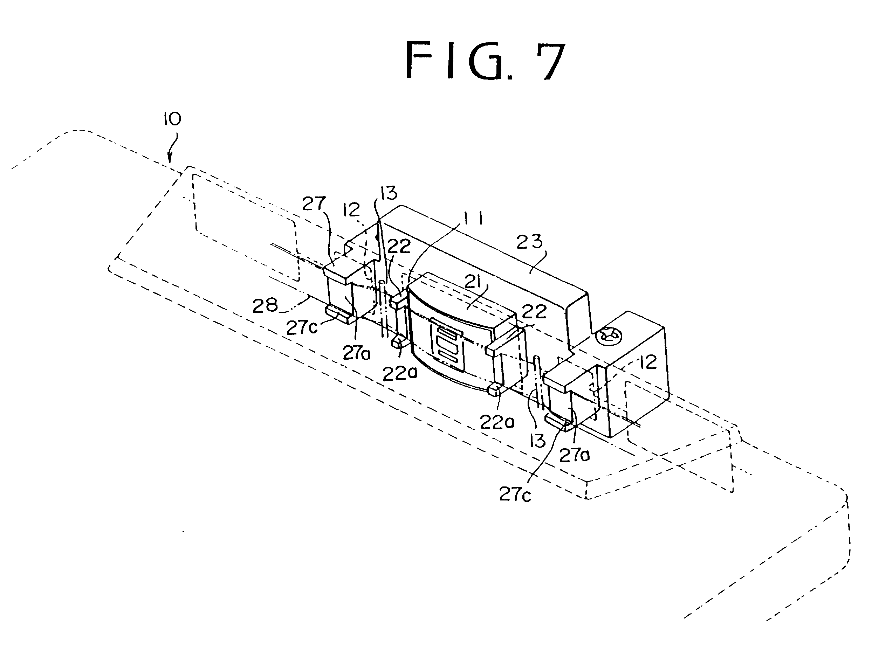

Referring to Figs. 1, 2 and 7, provided is a head supporting member 23 made of plastic and having an opening 23s for mounting a magnetic head 21. A pair of inside tape guides 22 are integrally formed on the head supporting member 23 at opposite sides of the opening 23s, and a pair of outside tape guide 27 are integrally formed on the supporting member 23 at opposite end portions thereof. The tape guide 27 is inserted into an opening 12 of a cassette half 10 as shown in Fig. 7.

A width A of the guide groove 27a of the tape guide 27 is finished with high accuracy. The width A for a magnetic tape 28 having a standard width of 3,76 to 3,81 mm is 3,79 to 3,83 mm. If the width A is smaller than 3,79, edges of the magnetic tape may be curled by walls of the guide groove, which will cause damage of the tape. If the width exceeds 3,83 mm, the tape cannot be guided properly so that the tape may be inclined with respect to a center line of a gap of the magnetic head. Such an inclination of the tape causes a reduction of the output of the magnetic head.

The output reduction can be expressed as follows. 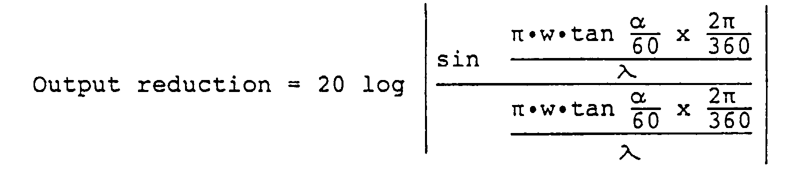 where
w is the width of a recording track (mm),
λ is the wave length (m),
α is the inclination angle ('), and
ΔL is the gap between the tape and the side wall of the guide groove.

Furthermore, ΔL = 28 tan α.

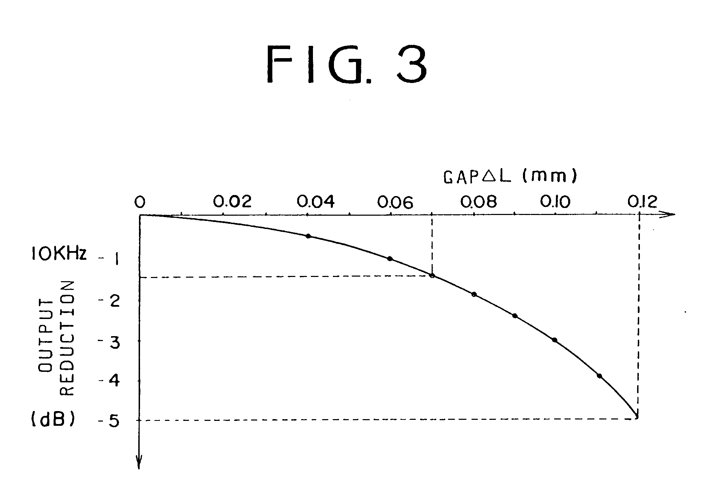

Fig. 3 shows the relationship between the output reduction and the gap ΔL. If a maximum allowable output reduction is -5 dB at 10 kHz, the gap ΔL is 0,12 mm. A preferable output reduction in consideration of quantity production is -1,5 dB. Therefore the gap ΔL is 0,07 mm. Accordingly, a maximum width A of the guide groove is 3,83 mm.

The more the length of the guide groove 27a in the longitudinal direction of the tape 28 increases, the more running stability of the tape is ensured. Hence the guide groove has a length approximately equal to the width of the opening 12 of the cassette half 10 as shown in Fig. 7.

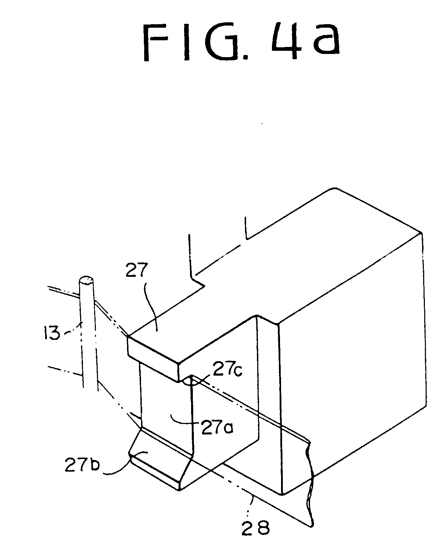

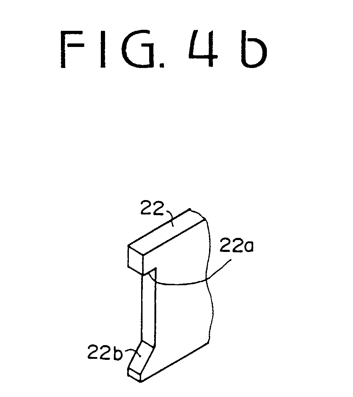

Although opposite walls 27c defining the guide groove 27a are perpendicular to the bottom of the groove as shown in Fig. 7, one of the walls 27c may be inclined as shown in Fig. 4a by reference 27b. The inclined wall 27b causes the magnetic tape to urge to the perpendicular wall 27c, thereby holding the tape in a predetermined path. As shown in Fig. 4b, a wall 22b of a guide groove 22a of the inside tape guide 22 may also be inclined.

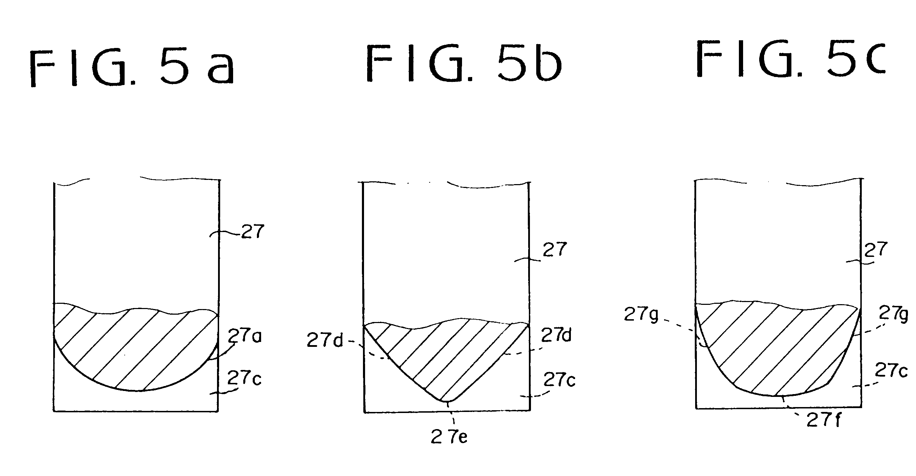

Referring to Fig. 5a, the bottom of the guide groove 27 may have a circular section in the running direction of the magnetic tape 28. Such a round bottom causes a constant contact with the tape. The bottom may have other round shapes shown in Figs. 5b and 5c. The bottom of Fig. 5b has slightly curved sides 27d and a small round top 27e having a radius of about 0,2 mm, thereby reducing friction between the tape and the bottom. The bottom of Fig. 5c has a flat top 27f and curved sides 27g.

The guide grooves 22a and 27a of the tape guides 22 and 27 are aligned at accuracy within 5/100. The groove 22a has a width equal to or slightly larger than the groove 27a. The side wall of the groove 22a may be an inclined wall like the inclined wall 27b.

The tape guides 22 and 27 integral with the supporting member 23 is made of synthetic resin selected from polyimide resin, polyester resin, acetal resins and polystyrene. Polyphenylen sulfide resin is preferably used because it has excellent adhesivity, chemical resistance, oil resistance, mechanical strength, and has a small thermal expansion coefficient and a low hygroscopicity.

The magnetic head 21 is inserted into the opening 23s of the supporting member 23 and fixed thereto with adhesives after the position and angular position of the head are adjusted. The magnetic head 21 may be secured to the supporting member 23 with screws or force fit. If the supporting member 23 and the magnetic head 21 are made with high accuracy, the magnetic head may be secured to the wall of the opening 23s without adjusting the position of the head. Furthermore, the head may be secured thereto by insert molding.

The supporting member 23 is mounted on a movable chassis 25 of a cassette recorder. The supporting member 23 has a positioning boss 23a on the underside thereof. On the other hand, the movable chassis 25 has an engaging hole 25a corresponding to the positioning boss 23a. The positioning boss 23a is engaged with the hole 25a and the supporting member 23 is secured to the movable chassis 25 with screws 23d which are passed through holes 23e of the supporting member 23 and engaged with threaded holes 25b of the chassis 25.

The movable chassis 25 with the magnetic head 21 is moved to the cassette half 10 when reproducing, so that the magnetic head 21 and the tape guides 22 are inserted into an opening 11 of the cassette half 10 and the tape guides 27 are inserted into the opening 12. The magnetic tape 28 is urged to the magnetic head 21 by poles 13 provided in the cassette half 10 as shown in Fig. 7.

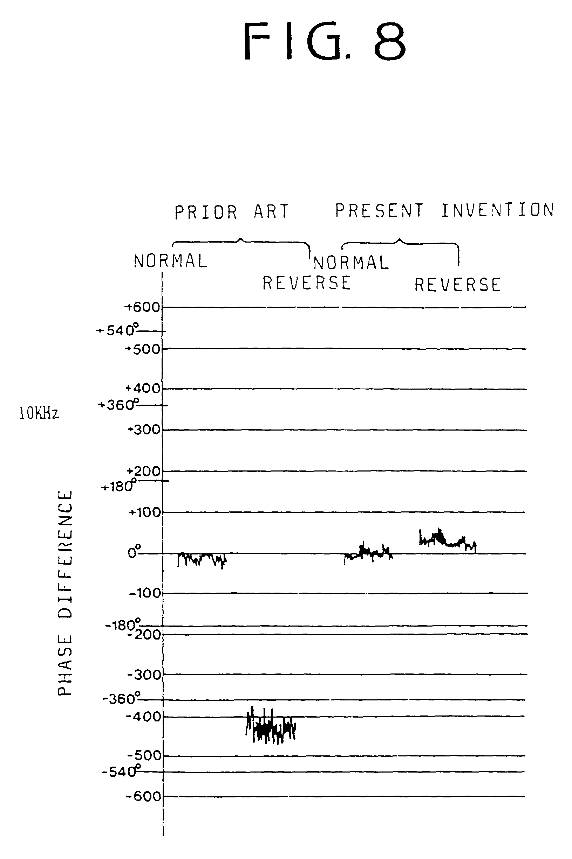

The cassette recorder provided with the magnetic head device of the present invention produces output signals without phase differences in the normal direction reproduction and in the reverse direction reproduction. Fig. 8 shows characteristics of the magnetic head device of the present invention and the conventional magnetic head device shown in Figs. 9 and 10 when a magnetic tape of 10 kHz is reproduced. There is a large phase difference between the normal direction reproduction and the reverse direction reproduction with the conventional magnetic head device.

Since the cassette recorder described above is of the bidirectional reproduction type, the tape guides 22 and 27 are provided at both sides of the magnetic head 21. In case of a monodirectional reproduction type, guides 22 and 27 are provided only on one side of the magnetic head, preferably on the downstream side of the magnetic head.

From the foregoing it will be understood that the present invention provides a magnetic head device in which tape guides are integral with a supporting member for the magnetic head, whereby angle adjustment is not necessary and hence the device can easily be assembled at a low cost.

While the presently preferred embodiments of the present invention have been shown and described, it is to be understood that this disclosure is for the purpose of illustration and that various changes and modifications may be made without departing from the scope of the invention as defined in the appended claims.

## Claims

1. A magnetic head device for reading and recording signals on a magnetic tape, especially in a cassette recorder, comprising:
- a supporting member (23) having an opening (23s) and tape guide means provided thereon for guiding a magnetic tape (28); and
- a magnetic head (21) secured to walls of the opening (23s) of the supporting member (23),
characterized in that the tape guide means (22, 27) comprise a pair of inside tape guides (22) and a pair of outside tape guides (27),
wherein the inside tape guides (22) are disposed on opposite sides of the opening (23s) of the supporting member (23),
and in that both pairs of the inside tape guides (22) and the outside tape guides (27) are formed integrally with the supporting member (23).

2. The device according to claim 1,
wherein each of the tape guide means (22, 27) has a guide groove (22a, 27a) defined by opposite walls (22a, 22b; 27b, 27c) for guiding the magnetic tape (28) passing the magnetic head (21).

3. The device according to claim 2,
wherein the bottom of the respective guide groove (22a, 27a) is flat.

4. The device according to any of claims 1 to 3,
wherein the bottom of the guide groove (27) has a curved shape (27a, 27d, 27g) in section, which is inclined with respect to a running direction of the magnetic tape (28).

5. The device according to any of claims 1 to 4,
wherein the bottom of each outside tape guide (27) has a width equal to that of the inside tape guide (22).

6. The device according to any of claims 1 to 4,
wherein the bottom of the inside tape guide (22) has a larger width than the outside tape guide (27).

7. The device according to any of claims 1 to 6,
wherein each of the tape guides (22, 27) has a guide groove (22a, 27a) defined by opposite walls (22a, 22b; 27b, 27c) for guiding the magnetic tape passing the magnetic head (21).

8. The device according to claim 7,
wherein the opposite walls (22a, 22b; 27b, 27c) of the guide groove (22a, 27a) of either of the inside tape guides (22) and the outside tape guides (27) comprise a perpendicular wall with respect to a bottom of the guide groove (22a, 27a), and an inclined wall (22b; 27b).

9. The device according to any of claims 1 to 8,
wherein the guide groove (27a) of the outside tape guide (27) has a longer length in a tape running direction than the inside tape guide (22).

10. The device according to any of claims 1 to 9,
wherein the width of each tape guide (22, 27) is 3,79 mm to 3,83 mm for a magnetic tape (28) having a standard width of 3,76 mm to 3,81 mm.

11. The device according to any of claims 1 to 10,
wherein the supporting member (23) with the integrally formed tape guides (22, 27) is made of a synthetic resin selected from polyimide resin, polyester resin, acetal resins, polystyrene and polyphenylen sulfide resin.

## Patentansprüche

1. Magnetkopfvorrichtung zum Lesen und Aufzeichnen von Signalen auf einem Magnetband, insbesondere in einem Kassettenrecorder, die folgendes aufweist:
- ein Tragteil (23) mit einer Öffnung (23s) und an dem Tragteil vorgesehenen Bandführungseinrichtungen zum Führen des Magnetbandes (28); und
- einen an den Wänden der Öffnung (23s) des Tragteiles (23) befestigten Magnetkopf (21),
**dadurch gekennzeichnet,**
daß die Bandführungseinrichtungen (22, 27) ein Paar innerer Bandführungen (22) und ein Paar äußerer Bandführungen (27) aufweisen,
wobei die inneren Bandführungen (22) an gegenüberliegenden Seiten der Öffnung (23s) des Tragteiles (23) angebracht sind,
und daß sowohl das Paar der inneren Bandführungen (22) als auch das Paar der äußeren Bandführungen (27) integral mit dem Tragteil (23) ausgebildet sind.

2. Vorrichtung nach Anspruch 1,
wobei jede der Bandführungseinrichtungen (22, 27) eine durch gegenüberliegende Wände (22a, 22b; 27b, 27c) gebildete Führungsnut (22a, 27a) zum Führen des am Magnetkopf (21) vorbeilaufenden Magnetbands (28) aufweist.

3. Vorrichtung nach Anspruch 2,
wobei der Boden der jeweiligen Führungsnut (22a, 27a) flach ausgebildet ist.

4. Vorrichtung nach einem der Ansprüche 1 bis 3,
wobei der Boden der Führungsnut (27) im Querschnitt eine Kurvenform (27q, 27d, 27g) aufweist, welche bezüglich der Laufrichtung des Magnetbands (28) geneigt ist.

5. Vorrichtung nach einem der Ansprüche 1 bis 4,
wobei der Boden von jeder äußeren Bandführung (27) eine Breite aufweist, die gleich der der inneren Bandführung (22) ist.

6. Vorrichtung nach einem der Ansprüche 1 bis 4,
wobei der Boden der inneren Bandführung (22) eine größere Breite als die äußere Bandführung (27) aufweist.

7. Vorrichtung nach einem der Ansprüche 1 bis 6,
wobei jede der Bandführungen (22, 27) eine durch gegenüberliegende Wände (22a, 22b; 27b, 27c) gebildete Führungsnut (22a, 27a) zum Führen des am Magnetkopf (21) vorbeilaufenden Magnetbands aufweist.

8. Vorrichtung nach Anspruch 7,
wobei die gegenüberliegenden Wände (22a), 27b; 27b, 27c) der Führungsnut (22a, 27a) sowohl der inneren Bandführung (22) als auch der äußeren Bandführung (27) eine senkrecht zu dem Boden der Führungsnut (22a, 27a) verlaufende Wand und eine geneigte Wand (22b; 27b) aufweisen.

9. Vorrichtung nach einem der Ansprüche 1 bis 8,
wobei die Führungsnut (27a) der äußeren Bandführung (27) in Bandlaufrichtung eine größere Länge besitzt als die innere Bandführung (22).

10. Vorrichtung nach einem der Ansprüche 1 bis 9,
wobei die Breite von jeder Bandführung (22, 27) einen Wert von 3,79 mm bis 3,83 mm für ein Magnetband mit einer Standardbreite von 3,76 mm bis 3,81 mm besitzt.

11. Vorrichtung nach einem der Ansprüche 1 bis 10,
wobei das Tragteil (23) mit den integral geformten Bandführungen (22, 27) aus einem Kunstharz besteht, das aus Polyimidharz, Polyesterharz, Azetalharz, Polystyrol und Polyphenylensulfidharz ausgewählt ist.

## Revendications

1. Dispositif à tête magnétique pour lire et enregistrer des signaux sur une bande magnétique, en particulier dans un enregistreur à cassettes, comprenant :
- un organe de soutien (23) ayant une ouverture (23s) et des moyens de guidage de bande disposés sur celui-ci pour guider une bande magnétique (28) ; et
- une tête magnétique (21) fixée à des parois de l'ouverture (23s) de l'organe de soutien (23),
caractérisé en ce que
les moyens de guidage de bande (22, 27) comprennent une paire de guides de bande intérieurs (22) et une paire de guides de bande extérieurs (27),
dans lesquels les guides de bande intérieurs (22) sont disposés sur des côtés opposés de l'ouverture (23s) de l'organe de soutien (23),
et en ce que les deux paires de guides de bande intérieurs (22) et de guides de bandes extérieurs (27) sont formées comme faisant partie intégrante de l'organe de soutien (23).

2. Dispositif selon la revendication 1, dans lequel chacun des moyens de guidage de bande (22, 27) a une gorge de guidage (22a, 27a) définie par des parois opposées (22a, 22b ; 27b, 27c), pour guider la bande magnétique (28) qui passe devant la tête magnétique (21).

3. Dispositif selon la revendication 2, dans lequel le fond de la gorge de guidage respective (22a, 27a) est plat.

4. Dispositif selon l'une quelconque des revendications 1 à 3, dans lequel le fond de la gorge de guidage (27) a une forme courbe (27a, 27d, 27g) en section, qui est inclinée par rapport à un sens d'avancement de la bande magnétique (28).

5. Dispositif selon l'une quelconque des revendications 1 à 4, dans lequel le fond de chaque guide de bande extérieur (27) a une largeur égale à celle du guide de bande intérieur (22).

6. Dispositif selon l'une quelconque des revendications 1 à 4, dans lequel le fond du guide de bande intérieur (22) a une plus grande largeur que le guide de bande extérieur (27).

7. Dispositif selon l'une quelconque des revendications 1 à 6, dans lequel chacun des guides de bande (22, 27) a une gorge de guidage (22a, 27a) définie par des parois opposées (22a, 22b ; 27b, 27c), pour guider la bande magnétique passant devant la tête magnétique (21).

8. Dispositif selon la revendication 7, dans lequel les parois opposées (22a, 22b ; 27b, 27c) de la gorge de guidage (22a, 27a) des guides de bande intérieurs (22) ou des guides de bande extérieurs (27) comprennent une paroi perpendiculaire par rapport à un fond de la gorge de guidage (22a, 27a), et une paroi inclinée (22b ; 27b).

9. Dispositif selon l'une quelconque des revendications 1 à 8, dans lequel la gorge de guidage (27a) du guide de bande extérieur (27) a une plus grande longueur dans un sens d'avancement de la bande, que le guide de bande intérieur (22).

10. Dispositif selon l'une quelconque des revendications 1 à 9, dans lequel la largeur de chaque guide de bande (22, 27) est de 3,79 mm à 3,83 mm pour une bande magnétique (28) ayant une largeur standard de 3,76 mm à 3,81 mm.

11. Dispositif selon l'une quelconque des revendications 1 à 10, dans lequel l'organe de soutien (23) avec les guides de bande formés de façon intégrale (22, 27), est fait d'une résine synthétique choisie parmi la résine de polyimide, la résine de polyester, des résines d'acétal, le polystyrène et la résine de sulfure de polyphénylène.
